# EUROPEAN PATENT APPLICATION

(11) **EP 4 773 028 A1**
(43) Date of publication of application: **08.07.2026**
(21) Application number: 23955450.4
(22) Date of filing: 12.10.2023
(51) Int. Cl.: G06F 21/33

(54) **INFORMATION MANAGEMENT DEVICE, INFORMATION MANAGEMENT METHOD, AND PROGRAM**

(71) Applicant: HONDA MOTOR CO., LTD., Tokyo 105-8404 (JP)
(72) Inventor: KIMURA, Toru, 63073 Offenbach am Main (DE); KOPP, Martin, 63073 Offenbach am Main (DE); KOEBEL, Christian, 63073 Offenbach am Main (DE)
(74) Representative: Kiwit, Benedikt
(86) International application number: PCT/JP2023/037025
(87) International publication number: WO 2025/079202

(57) **Abstract**

An information management device includes a pairing process portion that performs, in response to a pairing request from a terminal device of a user, a pairing process which associates an apparatus used by the user in a predetermined service with the terminal device, a storage portion that stores a pairing certificate which certifies that the terminal device and the apparatus are associated with each other by the pairing process, and a certificate provision portion that cooperates with a service provider which provides the service in relation to a use of the service by the user, wherein the pairing process portion generates the pairing certificate based on a DID (Decentralized Identifier) of the user and a DID of the apparatus and stores the pairing certificate in the storage portion, and the certificate provision portion provides the pairing certificate stored in the storage portion to the service provider in response to a request from the service provider.

## Description

### TECHNICAL FIELD

The present invention relates to an information management device, an information management method, and a program.

### BACKGROUND ART

In the related art, in order to provide a traveler with a mobility service, a credit certificate based on a DID (Decentralized Identifier) is issued to the traveler (for example, refer to Patent Document 1). Patent Document 1 discloses a communication network node in which a user (traveler) receives the issuance of a certificate by using a terminal device and transmits the issued credit certificate to a transportation business operator of the mobility service.

### Related Art Documents

### Patent Documents

Patent Document 1: Published Japanese Translation No. 2023-510955 of the PCT International Publication

### SUMMARY OF INVENTION

### PROBLEM TO BE SOLVED BY THE INVENTION

However, in the related art, there is a possibility that the traveler can acquire a credit certificate for himself or herself but cannot acquire a credit certificate for one (for example, property or the like) associated with him or her.

The present invention has been made in consideration of such circumstances, and an object of the present invention is to issue a credit certificate that can certify the credit of both a user and an object associated with the user.

### MEANS FOR SOLVING THE PROBLEM

An information management device, an information management method, and a program according to this invention employ the following configurations.
(1): An information management device according to an aspect of this invention is an information management device including a pairing process portion that performs, in response to a pairing request from a terminal device of a user, a pairing process which associates an apparatus used by the user in a predetermined service with the terminal device, a storage portion that stores a pairing certificate which certifies that the terminal device and the apparatus are associated with each other by the pairing process, and a certificate provision portion that cooperates with a service provider which provides the service in relation to a use of the service by the user, wherein the pairing process portion generates the pairing certificate based on a DID (Decentralized Identifier) of the user and a DID of the apparatus and stores the pairing certificate in the storage portion, and the certificate provision portion provides the pairing certificate stored in the storage portion to the service provider in response to a request from the service provider.
(2): In the aspect (1) described above, the pairing process portion transmits the pairing certificate generated in response to the pairing request to the terminal device of the user who is a requester of the pairing request.
(3): In the aspect (1) described above, the pairing process portion generates the pairing certificate as a verifiable credential that is capable of verifying a validity of the pairing certificate based on the DID of the user and the DID of the apparatus.
(4): In the aspect (1) described above, the pairing certificate is information including a DID of the terminal device of the user and the DID of the apparatus.
(5): In the aspect (1) described above, the pairing certificate is information associated with a DID of the terminal device of the user and the DID of the apparatus, and when the certificate provision portion is requested to provide the pairing certificate from the service provider, the certificate provision portion provides only the pairing certificate to the service provider and does not provide the DID of the terminal device of the user and the DID of the apparatus to the service provider.
(6): In the aspect (1) described above, the apparatus exchanges energy with the service provider.
(7): An information management method according to an aspect of this invention is an information management method, wherein a computer performs, in response to a pairing request from a terminal device of a user, a pairing process which associates an apparatus used by the user in a predetermined service with the terminal device, stores, in a storage portion, a pairing certificate which certifies that the terminal device and the apparatus are associated with each other by the pairing process, and cooperates with a service provider which provides the service in relation to a use of the service by the user, and wherein in the pairing process, the pairing certificate is generated based on a DID (Decentralized Identifier) of the user and a DID of the apparatus and is stored in the storage portion, and the pairing certificate stored in the storage portion is provided to the service provider in response to a request from the service provider.
(8): A program according to an aspect of this invention is a program causing a computer to perform, in response to a pairing request from a terminal device of a user, a pairing process which associates an apparatus used by the user in a predetermined service with the terminal device, store, in a storage portion, a pairing certificate which certifies that the terminal device and the apparatus are associated with each other by the pairing process, and cooperate with a service provider which provides the service in relation to a use of the service by the user, wherein in the pairing process, the pairing certificate is generated based on a DID (Decentralized Identifier) of the user and a DID of the apparatus and is stored in the storage portion, and the pairing certificate stored in the storage portion is provided to the service provider in response to a request from the service provider.

### EFFECT OF THE INVENTION

According to the aspects (1) to (8), it becomes possible to issue a credit certificate that can certify the credit of both a user and an object associated with the user.

More specifically, according to the aspects (1), (7), and (8), the pairing certificate based on the DID of the user terminal device and the DID of the apparatus (hereinafter, referred to as a user apparatus) used by the user is stored in the user apparatus side and is managed so as to be accessible from the a third-party service provider. Therefore, when the third-party service provider receives a service request from the user terminal device, by acquiring and verifying the pairing certificate from the user apparatus, it becomes possible to reliably and easily identify the relationship between the apparatus and the user who is a requester.

Further, according to the aspect (2), the pairing certificate is also provided to the user terminal device, and thereby, it becomes possible for the third-party service provider to acquire the pairing certificate from not only the user apparatus but also the user terminal device and verify the relationship.

Further, according to the aspect (3), by generating the pairing certificate in the form of the verifiable credential, it is possible to prevent the pairing certificate from being falsified by a third party and to protect the fact that the user and the user apparatus are paired with each other with high security. Further, by generating the pairing certificate as the verifiable credential, since it is sufficient to provide the service provider with the pairing certificate that certifies only the fact of pairing and it is not necessary to provide other user data, it is possible to protect personal information of the user.

Further, according to the aspect (4), the pairing certificate includes the DID, and thereby, even when the user apparatus is paired with a plurality of user terminal devices, it becomes possible to reliably and easily verify the relationship with the user with respect to an arbitrary user apparatus.

Further, according to the aspect (5), the pairing certificate does not include the DID, and thereby, it becomes possible to reliably and easily verify the relationship between the user and the user apparatus while enhancing the confidentiality of the information.

Further, according to the aspect (6), when energy is traded (exchanged) between the user apparatus and the service provider, it becomes possible to accurately identify a supplier and a consumer of the energy.

### BRIEF DESCRIPTION OF DRAWINGS

[FIG. 1] FIG. 1 is a view schematically showing a method of certifying the credit for a user by a mechanism of verifiable credentials.
[FIG. 2] FIG. 2 is a view schematically showing a user authentication system of an embodiment.
[FIG. 3] FIG. 3 is a view showing an example of a functional configuration of the user authentication system of the embodiment.
[FIG. 4] FIG. 4 is a view showing an example of a flow of a process in which an electric vehicle performs pairing between the electric vehicle and a user and issues a pairing certificate.
[FIG. 5] FIG. 5 is a view showing an example of a flow from user registration to service provision regarding an energy service.
[FIG. 6] FIG. 6 is a view showing an example of the contents of a service request transmitted to a service provider by a service application when an energy trade is proposed.
[FIG. 7] FIG. 7 is a flowchart showing an example of a flow of a process relating to the energy trade.

### DESCRIPTION OF EMBODIMENTS

Hereinafter, an embodiment of an information management device, an information management method, and a program of the present invention will be described with reference to the drawings.

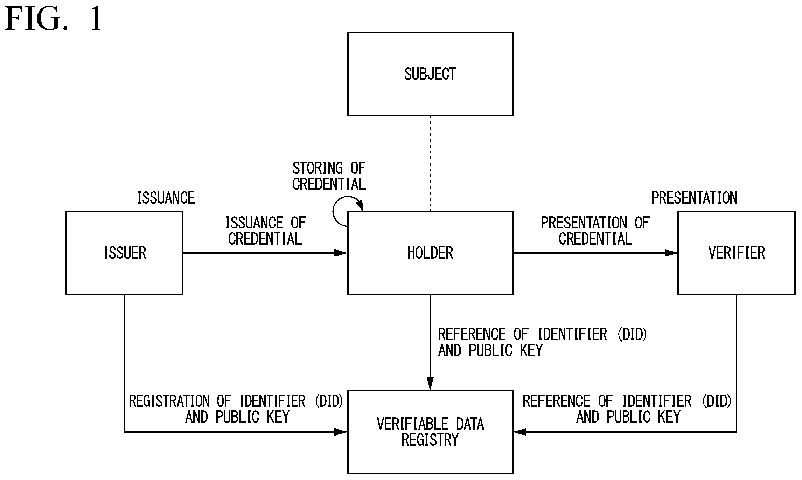

FIG. 1 is a view schematically showing a method of certifying the credit for a user by a mechanism of verifiable credentials. The verifiable credentials are credentials that are digitized such that the credentials can be mechanically verified. The credentials mean information used for authentication for performing an access control in information security and correspond to generally called credential information, authentication information, or the like. Examples of the credentials include a user ID and a password, biometric authentication information, a certificate, and the like. The verifiable credentials are different from an image data obtained by simply scanning a ticket surface and make it possible to mechanically verify "who the issuer is" and "whether there is no falsification in the contents" by using a digital signature technique. The specifications, the data model, and the like of the verifiable credentials are standardized by the W3C (World Wide Web Consortium).

As shown in FIG. 1, in the mechanism of the verifiable credentials, in general, an issuer, a holder, a verifier, a subject, and a verifiable data registry are assumed as characters. The issuer is one who issues a credential for the subject, and the holder is one who owns the issued credential. The credential is information in which the issuer claims that the subject has a specific attribute. The credential may be information indicating a specific attribute which the issuer claims about the subject. In general, the holder is often the subject, but the holder and the subject may be different from each other.

The verifier is one who receives presentation of the credential from the holder and verifies the validity of the credential. The verifiable data registry is a storage region of data used by the issuer, the holder, and the verifier. Information required for verification such as an identifier of the issuer, a public key, and expiration information of the credential is recorded in the verifiable data registry. The verifiable data registry is constituted as a region that can be referred to by anyone but cannot be arbitrarily rewritten. Due to the nature, the verifiable data registry is often implemented using blockchain.

The issuer applies a digital signature to target information to be certified with respect to the subject by using a private key of the issuer and thereby converts the target information into a credential. Since a public key corresponding to the private key is required for verification of the credential, the issuer registers the public key in the verifiable data registry in association with a DID (Decentralized Identifier) of the issuer. Thereby, the verifier can acquire the public key of the credential from the verifiable data registry by specifying the DID of the issuer corresponding to the credential. The verifiable data registry uses the DID for the management of the public key and thereby guarantees the association between the issuer and the public key in a decentralized manner without relying on a reliable third party such as a certificate authority.

A user authentication system in the present embodiment realizes the issuance of a credit certificate that can certify the credit of both a user and an object associated with the user on the basis of the mechanism of the verifiable credentials described above.

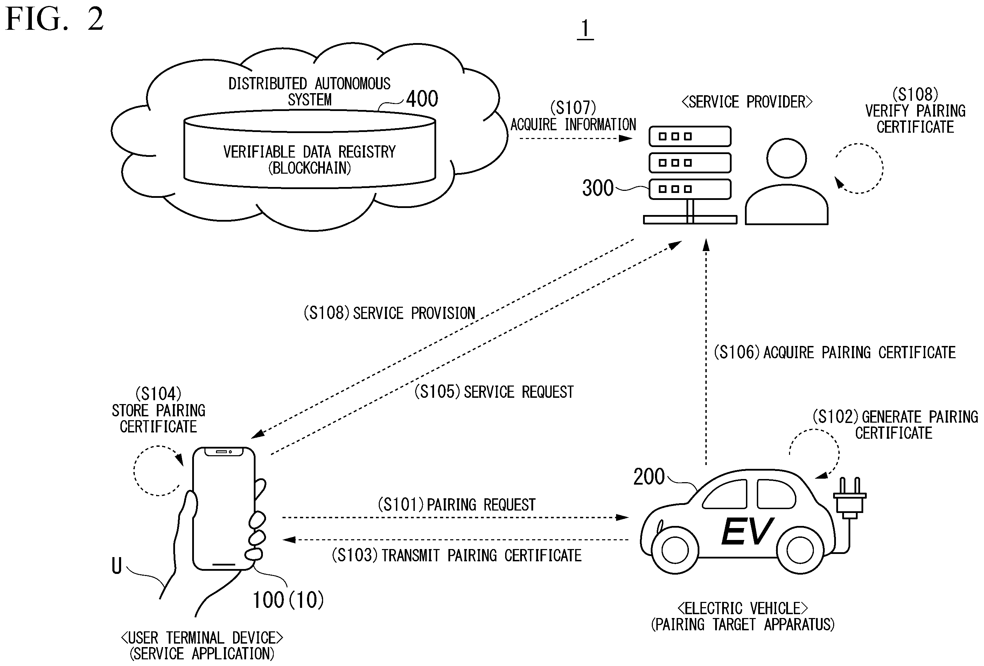

FIG. 2 is a view schematically showing a user authentication system 1 of the present embodiment. The user authentication system 1 realizes user authentication when a service provider provides a user with a service (hereinafter, referred to as an "energy service") of performing the exchange (for example, trade) of energy with an electric vehicle (EV) of the user. Since such an energy service involves the exchange of monetary value, it is a very important item to accurately identify and set a supplier and a consumer of the energy. Therefore, when providing the energy service, it is assumed that the service provider requests the user to provide information relating to the electric vehicle in order to manage the user in association with the electric vehicle. However, the information provided from the user is not always correct. For example, it is assumed that inappropriate information is provided for the purpose of abuse, and it is also assumed that after inappropriate information is once registered, it is not possible to notice that the inappropriate information is registered. The user authentication system 1 of the present embodiment is based on the mechanism of the verifiable credentials described in FIG. 1 in which by causing the user to present the credential indicating that the user and the electric vehicle are appropriately associated with each other, the service provider can provide the service to the appropriate combination of the user and the electric vehicle.

Hereinafter, a general flow of authentication in the user authentication system 1 is described. In the user authentication system 1, the user terminal device 100 is a terminal device such as a smartphone or a tablet used by a user U and is capable of communicating with an electric vehicle 200 and a service provider 300. The electric vehicle 200 is an example of an apparatus (pairing target apparatus) associated with the user U. The electric vehicle 200 is capable of communicating with the user terminal device 100 and the service provider 300. The service provider 300 provides the user U with an energy service. The service provider 300 is capable of communicating with the user terminal device 100, the electric vehicle 200, and a verifiable data registry 400. The verifiable data registry 400 is a system that holds information required for verification using the verifiable credentials and provides information required for verification in response to a request from the service provider 300.

First, the user U operates a service application 10 that operates on the user terminal device 100 and thereby requests pairing (association) with the user U to the electric vehicle 200 (S101: pairing request). In response to the pairing request, the electric vehicle 200 generates a certificate (hereinafter, referred to as a "pairing certificate") which certifies that the electric vehicle 200 and the user U are associated with each other as a verifiable credential (S102).

The pairing between the electric vehicle 200 and the user U may be that information unique to the user U is associated with information unique to the electric vehicle 200. For example, the pairing between the electric vehicle 200 and the user U may be realized by associating identification information of the user terminal device 100 with identification information of the electric vehicle 200 or may be realized by associating identification information of the service application 10 that operates on the user terminal device 100 with the identification information of the electric vehicle 200. The electric vehicle 200 transmits the generated pairing certificate to the user terminal device 100 (S103), and the user terminal device 100 stores the pairing certificate received from the electric vehicle 200 (S104). Hereinafter, the generation and the provision of the pairing certificate by the electric vehicle 200 in response to the request from the user terminal device 100 may be generically referred to as "issuance of the pairing certificate".

Subsequently, the user U operates the user terminal device 100 and thereby requests the service provider 300 to provide the energy service (S105: service request). When receiving the service request from the user terminal device 100, the service provider 300 acquires the pairing certificate from the electric vehicle 200 specified as the pairing target apparatus by the user U (S106). On the other hand, the service provider 300 acquires information required for verification of the acquired pairing certificate from the verifiable data registry 400 (S107).

As described above, the pairing certificate is generated as the verifiable credential and is stored in advance in a storage region associated with the electric vehicle 200 before providing the energy service. In the present embodiment, the storage region associated with the electric vehicle 200 is provided on a storage device mounted on the electric vehicle 200; however, the embodiment is not limited thereto. For example, the storage region associated with the electric vehicle 200 may be a storage region provided on a network capable of communicating, such as a so-called cloud system. The service provider 300 verifies the validity of the pairing certificate by a verification method specified by the W3C by using the information acquired from the verifiable data registry 400 in S107 (S108). When the validity of the pairing certificate is confirmed in S108, the service provider 300 provides the energy service to the user U (S109). More specifically, the service provider 300 provides the energy service to the user U by cooperating with the service application 10 that operates on the user terminal device 100.

Here, the electric vehicle 200 is an example of a pairing target apparatus, and the energy service is an example of a service provided to a user for whom valid pairing with the pairing target apparatus is confirmed. The service provided to the user for whom valid pairing with the pairing target apparatus is confirmed may be a service other than the energy service, and the apparatus (pairing target apparatus) paired with the user in relation to the service may be an apparatus other than the electric vehicle 200.

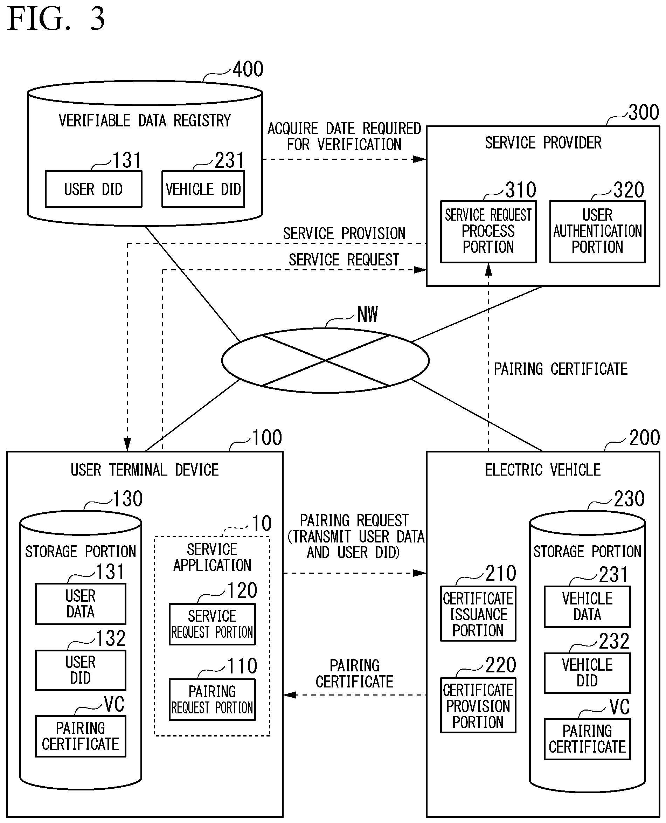

FIG. 3 is a view showing an example of a functional configuration of the user authentication system 1 of the present embodiment. As described above, the user authentication system 1 includes the user terminal device 100 operated by the user U, the electric vehicle 200 which is a pairing target apparatus of the user terminal device 100, the service provider 300, and the verifiable data registry 400. The user terminal device 100, the electric vehicle 200, the service provider 300, and the verifiable data registry 400 are capable of communicating with each other via the network NW. The network NW may include an arbitrary WAN (Wide Area Network) such as the Internet, a cellular network, or an exclusive line, may include an arbitrary LAN (Local Area Network), or may include both of them.

### [1. Configuration of user terminal device]

The user terminal device 100 includes, for example, a pairing request portion 110, a service request portion 120, and a storage portion 130. These constituent elements are implemented, for example, by a hardware processor such as a CPU (Central Processing Unit) executing a program (software). Some or all of these constituent elements may be realized by hardware (a circuit unit; including circuitry) such as an LSI (Large Scale Integration), an ASIC (Application Specific Integrated Circuit), an FPGA (Field-Programmable Gate Array), or a GPU (Graphics Processing Unit) or may be realized by cooperation of software and hardware. The program may be stored in a storage device (a storage device including a non-transient storage medium) such as an HDD (Hard Disk Drive) or a flash memory in advance or may be stored in a detachable storage medium (non-transient storage medium) such as a DVD or a CD-ROM and be installed by mounting the storage medium on a drive device.

The pairing request portion 110 requests pairing between the user U and the electric vehicle 200 to the electric vehicle 200 used by the user U. When the pairing between the user terminal device 100 and the electric vehicle 200 succeeds, a pairing certificate VC is issued from the electric vehicle 200 to the user terminal device 100. The pairing request portion 110 stores the pairing certificate VC issued by the electric vehicle 200 in the storage portion 130.

As described above, the pairing certificate VC is generated and managed as a verifiable credential by a method specified by the W3C. When requesting the pairing to the electric vehicle 200, the pairing request portion 110 transmits, to the electric vehicle 200, user data 131 relating to the user U and user DID 132 which is a DID of the user U as information required for generation of the pairing certificate. The user data 131 may be any data as long as the validity of the pairing can be certified by the combination with vehicle data 231 relating to the electric vehicle 200. Typically, the user data 131 is data including personal information of the user U. The user data 131 and the user DID 132 are stored in the storage portion 130 in advance.

The service request portion 120 requests the service provider 300 to provide the energy service (service request). When authentication of the user U succeeds in the service provider 300, the service application 10 can perform an operation for providing the user U with the energy service in cooperation with the service provider 300.

Here, it is assumed that the pairing request portion 110 and the service request portion 120 are integrated with the service application 10 which becomes a user interface when the user uses the energy service by using the user terminal device 100; however, one or both of the pairing request portion 110 and the service request portion 120 may be constituted as a separate program that cooperates with the service application 10.

### [2. Configuration of electric vehicle]

The electric vehicle 200 includes, for example, a certificate issuance portion 210, a certificate provision portion 220, and a storage portion 230. These constituent elements are implemented, for example, by a hardware processor such as a CPU executing a program (software). Some or all of these constituent elements may be realized by hardware (a circuit unit; including circuitry) such as an LSI, an ASIC, an FPGA, or a GPU or may be realized by cooperation of software and hardware. The program may be stored in a storage device (a storage device including a non-transient storage medium) such as an HDD, a flash memory, or an SSD in advance or may be stored in a detachable storage medium (non-transient storage medium) such as a DVD or a CD-ROM and be installed by mounting the storage medium on a drive device.

The certificate issuance portion 210 generates a pairing certificate VC in response to a pairing request from the user terminal device 100. More specifically, the certificate issuance portion 210 generates the pairing certificate VC by converting the user data 131 and the user DID 132 that are received from the user terminal device 100 which is a requester, and the vehicle data 231 and vehicle DID 232 that are registered in advance in the host vehicle into a verifiable credential defined by the W3C. More specifically, the certificate issuance portion 210 performs conversion of the user data 131, the user DID 132, the vehicle data 231, and the vehicle DID 232 in an irreversible and unreadable manner and thereby generates data (hereinafter, referred to as "pairing data") which becomes an origin of the pairing certificate. Due to this irreversibility and unreadability, the pairing data is generated such that the original user data 131, the original user DID 132, the original vehicle data 231, and the original vehicle DID 232 cannot be restored from the pairing data. Further, the certificate issuance portion 210 issues the pairing certificate VC as the verifiable credential by applying a digital signature to the generated pairing data. The certificate issuance portion 210 transmits (issues) the generated pairing certificate VC to the user terminal device 100 and also stores the generated pairing certificate VC in the host vehicle. More specifically, the certificate issuance portion 210 stores the generated pairing certificate VC in the storage portion 230 in association with the user DID 132 and the vehicle DID 232 which are the generation origins. The certificate issuance portion 210 is an example of a "pairing process portion".

Here, the following three methods are shown as examples as a method of storing the pairing certificate VC in the storage portion 230 in association with the user DID 132 and the vehicle DID 232 which are the generation origins. These methods are examples, and other methods may be employed for the storage method of the pairing certificate VC.

### (First storage method)

A first storage method is a method in which the user DID 132 and the vehicle DID 232 of the user which are the generation origins are included in the pairing certificate VC and stored in the storage portion 230. For example, the certificate issuance portion 210 may provide a predetermined header area or a predetermined footer area in data of the pairing certificate VC and store the user DID 132 and the vehicle DID 232 in a predetermined position of the header area or footer area.

### (Second storage method)

A second storage method is a method of including the user DID 132 and the vehicle DID 232 which are the generation origins in identification information in a region in which the pairing certificate VC is stored in the storage portion 230. For example, the certificate issuance portion 210 may create a folder (directory) having a name including the user DID 132 and the vehicle DID 232 on a file system of the storage portion 230 and store the pairing certificate VC under the folder. The user DID 132 and the vehicle DID 232 may be included in the name of the folder that is different from each other and has a hierarchical structure with each other. In this case, the pairing certificate VC may be stored under a folder of a low order.

### (Third storage method)

A third storage method is a method of providing an individual storage region for each pairing certificate VC in the storage portion 230 and storing data describing the user DID 132 and the vehicle DID 232 together with the pairing certificate VC in the storage region. Further, on the contrary, the third storage method may be a method of providing an individual storage region for each combination of the user DID 132 and the vehicle DID 232 in the storage portion 230 and storing the pairing certificate VC together with data describing the user DID 132 and the vehicle DID 232 in the storage region.

The certificate provision portion 220 provides the service provider 300 with the pairing certificate VC of a user (hereinafter, referred to as a "target user") who is a verification target in response to a request from the service provider 300. For example, the certificate provision portion 220 may acquire a user DID of the target user from the service provider 300, acquire the pairing certificate managed in association with the user DID from the storage portion 230, and provide the pairing certificate to the service provider 300. Further, for example, the certificate provision portion 220 may acquire a vehicle DID of the electric vehicle 200 paired with the target user from the service provider 300, acquire the pairing certificate managed in association with the vehicle DID from the storage portion 230, and provide the pairing certificate to the service provider 300. In addition to the methods described above, the method of acquiring the pairing certificate from the electric vehicle 200 by the service provider 300 may be a method using a service endpoint described later.

The storage portion 230 is a storage device such as an HDD, a flash memory, or an SSD. The vehicle data 231 and the vehicle DID 232 that are used for generation of the pairing certificate VC are registered in the storage portion 230 in advance. Further, the storage portion 230 may also be used as a storage place of the generated pairing certificate VC.

### [3. Configuration of service provider]

The service provider 300 includes, for example, a service request process portion 310 and a user authentication portion 320. These constituent elements are implemented, for example, by a hardware processor such as a CPU executing a program (software). Some or all of these constituent elements may be realized by hardware (a circuit unit; including circuitry) such as an LSI, an ASIC, an FPGA, or a GPU or may be realized by cooperation of software and hardware. The program may be stored in a storage device (a storage device including a non-transient storage medium) such as an HDD, a flash memory, or an SSD in advance or may be stored in a detachable storage medium (non-transient storage medium) such as a DVD or a CD-ROM and be installed by mounting the storage medium on a drive device.

The service request process portion 310 receives and processes a request (service request) of providing an energy service received from the user terminal device 100. More specifically, when receiving a service request from the user terminal device 100, the service request process portion 310 confirms an authentication state of the user (that is, the target user) who is a requester, and when the authentication has been completed, the service request process portion 310 performs the process of the requested service and returns a process result to the user terminal device 100. On the other hand, when the authentication state of the target user is not an authentication complete state, the service request process portion 310 prompts the target user to perform user authentication and receives an authentication request for the target user from the user terminal device 100 which is the requester. The user authentication here is aimed at confirming that the target user is correctly paired with the electric vehicle 200 by the verification of the pairing certificate.

The service request process portion 310 requests the user authentication portion 320 to perform a process relating to the requested user authentication and receives a process result of the authentication request from the user authentication portion 320. When the user authentication with respect to the target user succeeds, that is, when the authentication state of the target user becomes the authentication complete state, the service request process portion 310 performs the service process requested by the target user and returns the process result to the user terminal device 100 which is the requester.

The user authentication portion 320 performs an authentication process with respect to the target user in response to a request from the service request process portion 310. More specifically, the user authentication portion 320 acquires the pairing certificate of the target user from the electric vehicle 200 and verifies the validity of the acquired pairing certificate (verifiable credential). When the validity of the pairing certificate is confirmed, the user authentication portion 320 notifies the service request process portion 310 that the authentication of the target user succeeds. On the other hand, when the validity of the pairing certificate is not confirmed, the user authentication portion 320 notifies the service request process portion 310 that the authentication of the target user fails.

The user authentication portion 320 can acquire data required for verification of the pairing certificate from the verifiable data registry 400. For example, when the pairing certificate is issued, data of the user DID 132 of the target user, the vehicle DID 232 of the electric vehicle 200 which is the pairing target, a public key used for generation of the pairing certificate, and the like are associated with each other and are registered in the verifiable data registry 400. When receiving an authentication request of a target user from the user terminal device 100, the user authentication portion 320 acquires a pairing certificate to be verified with respect to the target user from the electric vehicle 200, acquires data such as the public key required for verification of the pairing certificate from the verifiable data registry 400, and performs the verification.

### [4. Configuration of verifiable data registry]

The verifiable data registry 400 manages the data such as the public key required for verification of the pairing certificate in association with the user DID 132 of the target user and the vehicle DID 232 of the electric vehicle 200 which is the pairing target. According to this association, by specifying the user DID 132 or the vehicle DID 232, the user authentication portion 320 of the service provider 300 can acquire data such as the public key required for verification from the verifiable data registry 400. More specifically, a DIDComm end point for accessing the pairing certificate stored in the electric vehicle 200 is associated with each of the user DID 132 and the vehicle DID 232, and the service provider 300 acquires the DIDComm end point associated with the user DID 132 of the target user and thereby can acquire the pairing certificate VC to be verified with respect to the target user from the electric vehicle 200. The DIDComm is an asynchronous unidirectional messaging protocol using the DID as the address, and the DIDComm endpoint is a specification document of the DIDComm.

More specifically, the DIDComm endpoint is an endpoint (URI: Universal Resource Identifier) for communicating with an owner of the DID and can be arbitrarily described in a DID Document. The DID Document is information managed in association with the DIDComm endpoint. The DIDComm is defined as one of service endpoint types and is delivered to the owner of the DID by sending a message in a predetermined format to the URI. For example, by acquiring the endpoint of the vehicle DID 232 of the electric vehicle 200 paired with the target user from the verifiable data registry 400 and sending a message, the message is delivered to the electric vehicle 200, and the service provider 300 can acquire the pairing certificate from the electric vehicle 200 as a response to the message.

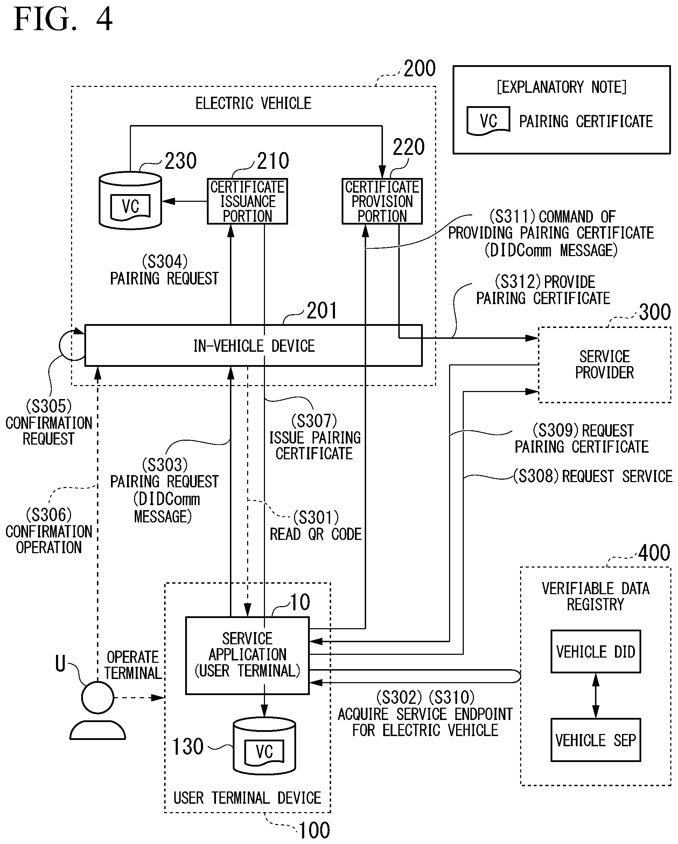

FIG. 4 is a view showing an example of a flow of a process in which the electric vehicle 200 performs pairing between the electric vehicle and the user U and issues the pairing certificate VC. Although omitted in FIG. 3 for simplicity, it is assumed here that an in-vehicle device 201 (Headunit) as a device having a communication function with the user terminal device 100 and the service provider 300 is mounted on the electric vehicle 200, and a QR code (registered trademark, the same applies hereinafter) indicating the vehicle DID 232 of the electric vehicle 200 is displayed on the in-vehicle device 201. The QR code may be displayed on a display portion of the in-vehicle device 201 or may be displayed on a surface of the in-vehicle device 201 in a form of a seal, an engraved mark, a printing, or the like.

First, the user U operates the service application 10 (DID agent) that operates on the user terminal device 100 and acquires the vehicle DID 232 of the electric vehicle 200 which becomes a pairing target by reading the QR code (registered trademark) displayed on the in-vehicle device 201 (S301). The service application 10 searches the acquired vehicle DID 232 in the verifiable data registry 400 and acquires a DIDComm endpoint (service endpoint) associated with the vehicle DID 232 (S302). The service application 10 sends a DIDComm message for notification of the pairing request to the acquired DIDComm endpoint and can thereby perform a pairing request to the certificate issuance portion 210 (DID agent) of the electric vehicle 200 (S303).

Subsequently, the in-vehicle device 201 of the electric vehicle 200 receives the DIDComm message transmitted from the service application, recognizes the pairing request, and forwards the recognized pairing request to the certificate issuance portion 210 (S304). When receiving the forwarded pairing request, the certificate issuance portion 210 causes the in-vehicle device 201 to display a message requesting a confirmation of the transmission of the pairing request to the electric vehicle (S305). The user U confirms the message and performs a confirmation operation regarding the transmission of the pairing request to the in-vehicle device 201 (S306). When the confirmation operation by the user U is performed, subsequently, the certificate issuance portion 210 generates a pairing certificate VC that certifies the pairing between the vehicle DID 232 and the user DID 132 and transmits the pairing certificate VC to the user terminal device 100 which is the requester (S307: issuance of pairing certificate). The user terminal device 100 stores the received pairing certificate VC in the storage portion 130. The certificate issuance portion 210 transmits the generated pairing certificate VC to the user terminal device 100 which is the requester and also stores the generated pairing certificate VC in the storage portion 230 of the own device.

After the issuance of the pairing certificate, the service provider 300 receives a request of providing the energy service from the user terminal device 100 (S308). In providing the energy service, the service provider 300 can request the user U to present the pairing certificate VC in order to certify the validity of the relationship between the user U and the electric vehicle 200 used by the user U (S309). In response to this request, for example, similarly to S302, the service application 10 acquires a service endpoint (DIDComm endpoint) with respect to the electric vehicle 200 from the verifiable data registry 400 (S310) and transmits, to the acquired service endpoint of the electric vehicle 200, a DIDComm message that commands provision of the pairing certificate VC to the service provider 300 (S311). The DIDComm message is delivered to the electric vehicle 200, and thereby, the electric vehicle 200 acquires the pairing certificate VC of the user U from the storage portion 230 and provides the pairing certificate VC to the service provider 300 (S312).

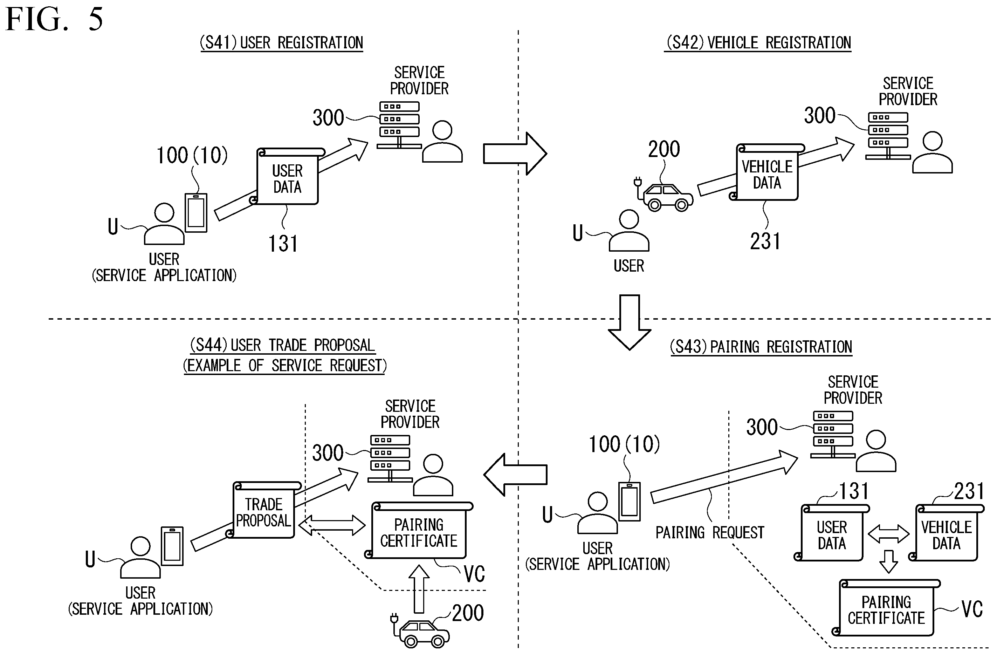

FIG. 5 is a view showing an example of a flow from user registration to service provision regarding an energy service. First, the user U provides the user data 131 to the service provider 300 by using the user terminal device 100 and thereby requests user registration to the service provider 300. The service provider 300 generates an account of the energy service with respect to the user U and performs the user registration of the user U by storing the provided user data 131 in association with the account (S41).

When the user registration is completed, subsequently, the user U operates the electric vehicle 200 (for example, the in-vehicle device 201) and provides the vehicle data 231 of the electric vehicle 200 used by the user U in the energy service to the service provider 300, and thereby, the user U requests registration (vehicle registration) of the electric vehicle 200 to the service provider 300. The service provider 300 performs the vehicle registration by storing the provided vehicle data 231 in association with the account of the user U (S42).

When the vehicle registration of the electric vehicle 200 is completed, subsequently, the user U requests pairing between the user U and the electric vehicle 200 to the service provider 300. When receiving the pairing request from the user terminal device 100, the service provider 300 issues the pairing certificate VC in cooperation with the electric vehicle 200. Although the case where the service application 10 directly performs the pairing request to the electric vehicle 200 is described in FIG. 4, the case where the service application 10 performs the pairing request to the electric vehicle 200 via the service provider 300 is described here. Even in this case, it is possible to cause the electric vehicle 200 to issue the pairing certificate VC by a method basically similar to that of FIG. 4.

For example, in this case, the service provider 300 can acquire the vehicle DID 232 of the electric vehicle 200 which becomes the pairing target from the service application 10 and command the electric vehicle 200 to issue the pairing certificate VC by performing S302 and S303 in FIG. 4 in place of the service application 10. The issued pairing certificate VC is stored in both the electric vehicle 200 and the user terminal device 100 (S43).

When the pairing (issuance of the pairing certificate) between the user U and the electric vehicle 200 is completed, the user U performs a service request relating to the energy service to the service provider 300. In FIG. 5, as an example of a service request, the user U proposes an energy trade to the service provider 300. The energy trade here means that users who propose the demand and supply of electric power perform the trade of electric power under the mediation by the service provider 300. The service provider 300 performs user authentication with respect to the user U by acquiring and verifying the pairing certificate VC associated with the user U from the electric vehicle 200. When the user authentication with respect to the user U succeeds, the service provider 300 receives the proposal of the user U to the market of the energy trade and performs the matching of the proposal with other users (S44).

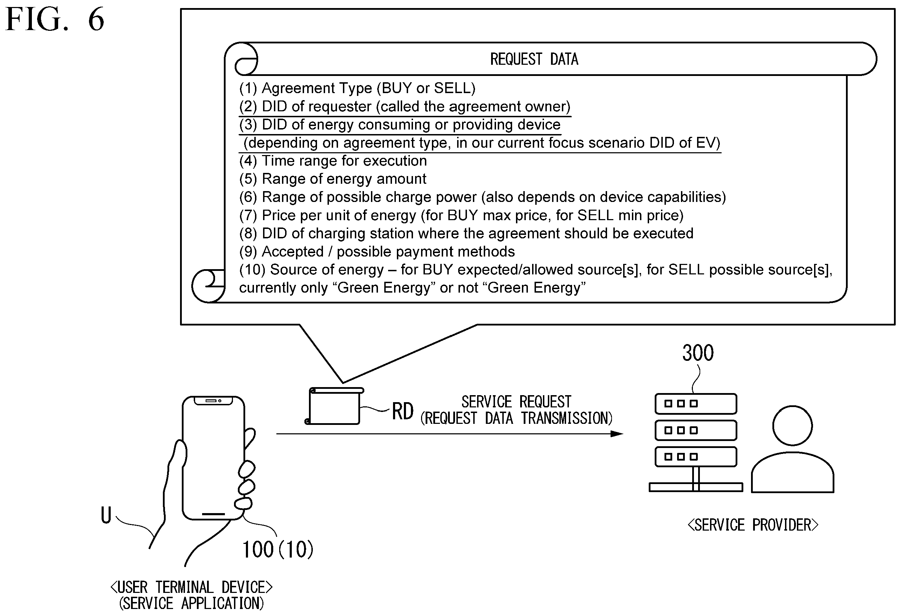

FIG. 6 is a view showing an example of the contents of a service request transmitted to the service provider 300 by the service application 10 when an energy trade is proposed. FIG. 6 shows an example of the case where, in the service request, request data RD including information on (1) Agreement type, (2) DID of requester (covenanter) (that is, user DID), (3) DID of energy consuming or providing device (that is, vehicle DID in the present embodiment), (4) Time range for execution of energy supply and demand, (5) Range of energy amount to be supplied and demanded, (6) Range of possible charge power, (7) Price per unit of energy, (8) DID of charging station where the agreement should be executed, (9) Payment methods, and (10) Source of energy for supply and demand (renewable energy or not, or the like) is transmitted to the service provider 300.

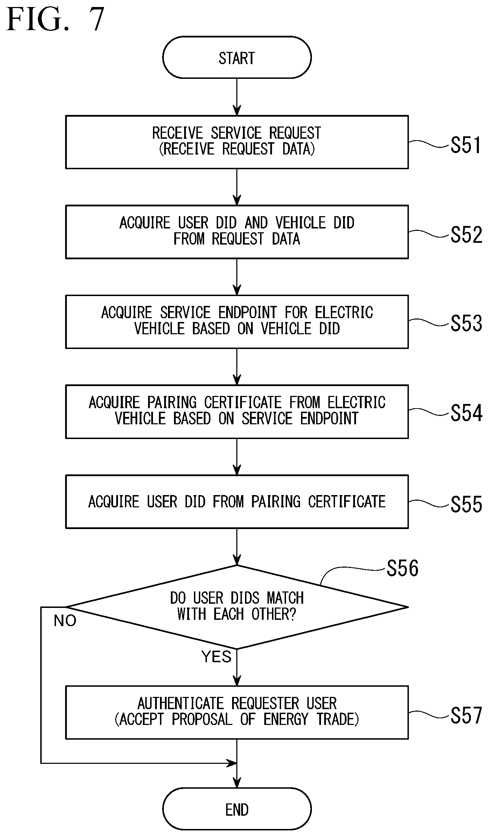

FIG. 7 is a flowchart showing an example of a flow of a process relating to the energy trade. In the case of the example of FIG. 6, the service provider 300 can perform user authentication with respect to a user who is a requester in the following flow. First, the service provider 300 receives the request data RD from the service application 10 and thereby receives a service request of energy trade (S51). Subsequently, the service provider 300 acquires the user DID of a requester user and the vehicle DID of the electric vehicle 200 of the requester user from the received request data RD (S52).

The service provider 300 acquires a service endpoint for the electric vehicle 200 from the verifiable data registry 400 on the basis of the acquired vehicle DID (S53). Subsequently, the service provider 300 acquires the pairing certificate VC from the electric vehicle 200 on the basis of the acquired service endpoint (S54). The service provider 300 acquires the user DID of the user paired with the electric vehicle 200 from the acquired pairing certificate VC (S55). Then, the service provider 300 determines whether or not the user DID that is acquired from the request data RD in S52 matches with the user DID that is acquired from the pairing certificate VC in S55 (S56), and when the user DIDs match with each other, the service provider 300 authenticates the requester user (S57) and accepts the proposal of the energy trade presented by the requester user.

Here, the service provider 300 does not verify the validity of the pairing certificate VC but performs authentication of the requester user by comparing the user DID (here, it is assumed that the pairing certificate VC includes the user DID according to the first storage method) associated with the pairing certificate VC to the user DID presented by the requester user; however, this is an example of user authentication based on the pairing certificate VC, and the method of the user authentication is not limited thereto.

For example, the service provider 300 causes the user to present the user DID and the vehicle DID at the time of the service request, acquires corresponding user data and corresponding vehicle data from the verifiable data registry 400 on the basis of the presented user DID and the presented vehicle DID, and acquires the pairing certificate VC from the electric vehicle 200 on the basis of the service endpoint associated with the presented vehicle DID. On the other hand, the service provider 300 may generate pairing data (first pairing data) by the same method as that of the electric vehicle 200 on the basis of the user DID, the user data, the vehicle DID, and the vehicle data which are acquired, and when second pairing data that is acquired from the pairing certificate VC matches with the first pairing data, the service provider 300 may authenticate the requester user. In this case, the pairing certificate VC to be verified may be acquired from the user terminal device 100 on the basis of the presented user DID.

Further, for example, the service provider 300 may cause the user to present the vehicle DID at the time of the service request, acquire the pairing certificate CV from the electric vehicle 200 by the same method as that of FIG. 7, and authenticate the requester user when the vehicle DID that is acquired from the pairing certificate CV matches with the presented vehicle DID. Further, the requester user may be authenticated when the user DID and the vehicle DID that are acquired from the pairing certificate CV match with the user DID and the vehicle DID that are presented.

Further, for example, the service provider 300 may cause the user to present the pairing certificate VC instead of causing the user to present the user DID and/or the vehicle DID at the time of the service request. In this case, the service provider 300 may acquire the user DID and/or the vehicle DID from the presented pairing certificate VC.

According to the user authentication system 1 of the embodiment described above, by issuing the pairing certificate that certifies the pairing between the user terminal device 100 and the electric vehicle 200 to the user as the verifiable credential, the service provider 300 of the energy service can accurately confirm the validity of the pairing between the user and the electric vehicle 200 by verifying the pairing certificate of the user when providing the service to the user.

The embodiment described above can be represented as follows.

An information management device including
a storage medium that stores computer-readable instructions, and
a processor connected to the storage medium, the processor executing the computer-readable instructions to:
   perform, in response to a pairing request from a terminal device of a user, a pairing process which associates an apparatus used by the user in a predetermined service with the terminal device;
   store, in a storage portion, a pairing certificate which certifies that the terminal device and the apparatus are associated with each other by the pairing process; and
   cooperate with a service provider which provides the service in relation to a use of the service by the user,
   wherein in the pairing process, the pairing certificate is generated based on a DID (Decentralized Identifier) of the user and a DID of the apparatus and is stored in the storage portion, and
   the pairing certificate stored in the storage portion is provided to the service provider in response to a request from the service provider.

Although modes for carrying out the present invention have been described using the embodiment, the present invention is not limited to the embodiment, and various modifications and substitutions can be made without departing from the scope of the present invention.

### DESCRIPTION OF REFERENCE SYMBOLS

1 User authentication system
10 Service application
100 User terminal device
110 Pairing request portion
120 Service request portion
130 Storage portion
131 User data
132 User DID
200 Electric vehicle
201 In-vehicle device
210 Certificate issuance portion
220 Certificate provision portion
230 Storage portion
231 Vehicle data
232 Vehicle DID
300 Service provider
310 Service request process portion
320 User authentication portion
400 Verifiable data registry

## Claims

1. An information management device comprising
a pairing process portion that performs, in response to a pairing request from a terminal device of a user, a pairing process which associates an apparatus used by the user in a predetermined service with the terminal device,
a storage portion that stores a pairing certificate which certifies that the terminal device and the apparatus are associated with each other by the pairing process, and
a certificate provision portion that cooperates with a service provider which provides the service in relation to a use of the service by the user,
wherein the pairing process portion generates the pairing certificate based on a DID (Decentralized Identifier) of the user and a DID of the apparatus and stores the pairing certificate in the storage portion, and
the certificate provision portion provides the pairing certificate stored in the storage portion to the service provider in response to a request from the service provider.

2. The information management device according to claim 1,
wherein the pairing process portion transmits the pairing certificate generated in response to the pairing request to the terminal device of the user who is a requester of the pairing request.

3. The information management device according to claim 1,
wherein the pairing process portion generates the pairing certificate as a verifiable credential that is capable of verifying a validity of the pairing certificate based on the DID of the user and the DID of the apparatus.

4. The information management device according to claim 1,
wherein the pairing certificate is information including a DID of the terminal device of the user and the DID of the apparatus.

5. The information management device according to claim 1,
wherein the pairing certificate is information associated with a DID of the terminal device of the user and the DID of the apparatus, and
when the certificate provision portion is requested to provide the pairing certificate from the service provider, the certificate provision portion provides only the pairing certificate to the service provider and does not provide the DID of the terminal device of the user and the DID of the apparatus to the service provider.

6. The information management device according to claim 1,
wherein the apparatus exchanges energy with the service provider.

7. An information management method,
wherein a computer
performs, in response to a pairing request from a terminal device of a user, a pairing process which associates an apparatus used by the user in a predetermined service with the terminal device,
stores, in a storage portion, a pairing certificate which certifies that the terminal device and the apparatus are associated with each other by the pairing process, and
cooperates with a service provider which provides the service in relation to a use of the service by the user, and
wherein in the pairing process, the pairing certificate is generated based on a DID (Decentralized Identifier) of the user and a DID of the apparatus and is stored in the storage portion, and
the pairing certificate stored in the storage portion is provided to the service provider in response to a request from the service provider.

8. A program causing a computer to
perform, in response to a pairing request from a terminal device of a user, a pairing process which associates an apparatus used by the user in a predetermined service with the terminal device,
store, in a storage portion, a pairing certificate which certifies that the terminal device and the apparatus are associated with each other by the pairing process, and
cooperate with a service provider which provides the service in relation to a use of the service by the user,
wherein in the pairing process, the pairing certificate is generated based on a DID (Decentralized Identifier) of the user and a DID of the apparatus and is stored in the storage portion, and
the pairing certificate stored in the storage portion is provided to the service provider in response to a request from the service provider.
